Europäisches Patentamt

European Patent Office

Office européen des brevets

(19)

(11) EP 0 543 718 B1

(12) FASCICULE DE BREVET EUROPEEN

(45) Date de publication et mention
de la délivrance du brevet:
**12.06.1996 Bulletin 1996/24**

(51) Int Cl.6: **G02F 1/1333**, G02F 1/1335,
G02F 1/1347, G02B 27/00,
F41G 3/22

(21) Numéro de dépôt: **92403086.9**

(22) Date de dépôt: **17.11.1992**

(54) **Matériau constitutif d'une lunette de visée et arme utilisant cette lunette**

Grundmaterial eines Zielfernrohres sowie ein Gewehr unter Verwendung desselben

Constituent material for sighting glasses and gun using these sighting glasses

(84) Etats contractants désignés:
**DE FR GB**

(30) Priorité: **19.11.1991 FR 9114221**

(43) Date de publication de la demande:
**26.05.1993 Bulletin 1993/21**

(73) Titulaire: **THOMSON-CSF**
**75008 Paris (FR)**

(72) Inventeurs:
• **Michel, Claude, THOMSON-CSF**
**F-92402 Courbevoie Cedex (FR)**
• **Le Pesant, Jean-Pierre, THOMSON-CSF**
**F-92402 Courbevoie Cedex (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
EP-A- 0 087 998          FR-A- 2 466 822
FR-A- 2 577 694          GB-A- 2 146 477
US-A- 4 850 681

• PATENT ABSTRACTS OF JAPAN vol. 011, no.
345 (P-636)10 Juin 1987 & JP-A-62 127 826

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention se situe dans le domaine des dispositifs de visée pour armes individuelle ou collective du type dans lequel un réticule collimaté doit être mis en coïncidence avec la cible visée.

Dans l'état actuel de la technique le réticule est visible à travers un oeilleton ou un oculaire lié de façon plus ou moins directe à l'arme. Ainsi sur un fusil le réticule et l'oeilleton sont montés directement sur le canon du fusil et le tireur doit porter l'oeilleton donc le fusil dans la ligne de visée. Sur des engins plus importants tels des chars, le viseur est autonome et un servomécanisme pointe sur commande l'arme sur l'objet visé en prenant en compte, la distance, la vitesse et la direction du vent, la nature de la munition tirée et d'une façon générale tous les paramètres nécessaires à la réussite du tir. Dans de tels dispositifs le pointeur de l'arme doit encore regarder le réticule collimaté à travers un oeilleton lié de façon mécanique au système de visée.

La présente invention a pour but de désacoupler la liaison mécanique plus ou moins directe entre le réticule collimaté et le système d'armes. Bien qu'applicable à des armes plus importantes l'invention est particulièrement bien adaptée au tir avec arme individuelle à courte distance car elle permet de visualiser en permanence le réticule de pointage de l'arme. L'invention vise donc à permettre le tir que l'on appelle actuellement "au jugé" ou "à la hanche" en connaissant la direction exacte de pointage de l'arme et éventuellement de visualiser le champ de dispersion de l'arme.

Dans le cas d'un tir à projectile unique le champ de dispersion est représenté par un contour entourant la surface susceptible d'être atteinte par le projectile. Dans le cas d'un tir à projectiles multiples genre cartouche de chasse le champ de dispersion est le champ dans lequel se dispersent les projectiles individuels contenus dans la cartouche.

Le dispositif selon l'invention peut également permettre dans certains modes de réalisation la protection des yeux du tireur contre les attaques chimiques ou laser.

A des fins civiles l'invention peut être utilisée pour visualiser la visée de n'importe quel appareil porté par le porteur d'une lunette incluant l'invention en particulier caméra, camescopes ou appareil photo. Elle permet dans le cas de ce genre d'appareil de faire apparaître le contour du champ de la caméra, du camescope ou de l'appareil photo. Il est également possible de faire apparaître des modifications virtuelles du décors.

L'invention est relative tout d'abord à un matériau permettant lorsqu'il est utilisé comme verre de lunette de faire apparaître une image, en particulier un réticule collimaté en n'importe quel point de la surface du verre, elle est relative à la lunette utilisant un tel matériau.

Lorsqu'un tireur porte une telle lunette il n'y a plus qu'à connaître la direction de pointage de l'arme et celle de la tête pour pouvoir au moyen d'un calculateur corréler les deux et afficher sur la lunette la direction de pointage de l'arme.

L'invention est donc relative également à l'arme qui porte des capteurs de direction dont les données sont transmises par liaison de préférence infrarouge (IR) vers un calculateur qui reçoit par ailleurs les données relative à la position de la tête du tireur. Après calcul de corrélation il ne reste plus qu'à commander l'affichage du réticule dans la direction de pointage de l'arme.

A toute ces fins l'invention a pour objet un matériau composite destiné à former la surface transparente de lunettes caractérisé en ce qu'il comporte au moins trois couches minces successives une seconde couche étant entre une première et une troisième couche, la première couche étant constituée d'un matériau transparent comportant deux faces, l'une des caractéristiques optiques du matériau transparent étant susceptible d'être modifiée localement par application d'un champ électrique, chacune des faces de cette première couche étant pourvue d'un réseau matriciel d'électrodes, la troisième couche étant réalisée dans un matériau polymère transparent formable ayant deux faces une première et une seconde entre lesquelles se trouve la matière constituant la couche, cette matière étant constituée d'une part d'une matrice comportant des microcavités régulièrement espacées les unes des autres, ces microcavités étant constituées d'une matière transparente différente de celle de la matrice, cette matière étant susceptible de deux indices de réfraction selon la valeur d'un champ électrique la traversant, pour une première valeur de champ, l'indice de réfraction de la matière se trouvant dans une microcavité est égal à l'indice de la matière constituant la matrice et pour une seconde valeur de champs l'indice de la matière constituant la cavité est supérieur à l'indice de la matrice, des électrodes étant associées à chaque microcavité pour pouvoir faire varier le champ électrique dans la microcavité et enfin la seconde couche étant une couche transparente d'épaisseur, de même indice de réfraction que la matière constituant la première couche et la matrice de la troisième couche.

La première couche constitue l'écran de visualisation, les différentes tensions locales entre électrodes de chaque face de la première couche en modifiant les caractéristiques optiques du matériau permettent de créer une image point par point.

La troisième couche constitue un système de microlentilles permettant lorsqu'il est activé par la tension entre les électrodes de chacune des faces de la troisième couche de collimater un point en regard, de la couche constituant l'écran.

L'écran de visualisation lui-même est réalisé avantageusement selon l'invention en utilisant un cristal liquide confiné entre deux surfaces de polymère qui peuvent être mises en forme, de faible poids et résistantes aux chocs. Les cristaux liquides classiques, du type nématique en hélice, peuvent être utilisés, ils conduisent à des réalisations de faible coût, mais nécessitent l'emploi de polariseurs, ce qui implique une absorption de la lumière incidente supérieure à 50% de l'intensité.

D'autres cristaux liquides, tels les cristaux liquides smectiques chiraux peuvent être utilisés. Ils présentent l'avantage d'une plus grande rapidité de commutation, d'un effet de bistabilité (mémoire) et d'une utilisation sous de très faibles épaisseurs ce qui permet d'éviter les problèmes de profondeur de mise au point des microlentilles et de parallaxe. Par contre, ils nécessitent aussi l'utilisation de polariseurs.

Un mode préféré de réalisation de la première couche consiste en l'utilisation de cristaux liquides dispersés dans une matrice polymère, sous forme de fines gouttelettes (dont la taille est de l'ordre du micromètre) dans lesquelles le cristal liquide peut être commuté électriquement entre deux états. L'existence de telles dispersions est connue de l'homme de l'art. Dans l'un de ces états, l'indice de réfraction est égal à celui de la matrice polymère et donc l'ensemble est transparent. Dans l'autre état, l'indice de réfraction est différent de celui de la matrice, ce qui conduit à une diffusion de la lumière incidente. Dans l'état de l'art actuel, les molécules de cristal liquide s'orientent spontanément parallèlement aux parois des gouttelettes, de sorte qu'on peut rendre la feuille contenant les gouttelettes transparente sous champ électrique et qu'elle est diffusante sans champ électrique appliqué. Par commutation électrique, les points commandés apparaissent alors diffusant sur un fond transparent qui laisse passer la lumière ambiante, provenant par exemple du paysage que l'on veut observer simultanément. L'avantage décisif d'une telle solution est qu'elle ne nécessite par de polariseurs et donc permet des niveaux élevés de transmission.

Pour augmenter le contraste des points de l'affichage, on dissout dans les gouttelettes de cristal liquide, avant leur dispersion dans la matrice polymère, des colorants absorbants pléochroïques, qui s'orientent parallèlement aux molécules de cristal liquide, suivant ainsi les mouvements d'orientation de celles-ci, commandés par le champ électrique.

Ces colorants absorbent fortement la lumière lorsqu'ils sont dans un état désordonné mais sont transparents à l'état ordonné. On obtient ainsi des points noirs sur un fond transparent. L'existence et la dissolution de ces colorants sont connus de l'homme de l'art.

Dans un mode préféré de réalisation la troisième couche est réalisée dans un matériau polymère transparent formable ayant deux demi couches, une première et une seconde, chaque demi couche ayant elle-même deux faces, une face lisse et une face ayant sa surface creusée de microcavités les faces creusées de chacune des demi couches étant en regard l'une de l'autre de telle sorte que chaque microcavité de l'une soit en regard d'une microcavité de l'autre et les microcavités ainsi formées étant d'une part pourvus d'électrodes et d'autre part remplies d'un liquide dont l'indice de réfraction est susceptible de changer sous l'action d'un champ électrique et enfin la seconde couche étant une couche transparente d'épaisseur, entre les premières et troisième couche constituée par une surépaisseur de la demi couche de la troisième couche se trouvant entre la première demi-couche et la première couche.

Dans un mode de réalisation selon l'invention, de la troisième couche, les microlentilles sont constituées d'éllipsoïdes aplatis de faibles dimensions, typiquement une à quelques centaines de micromètres de diamètre et une dizaine à quelques dizaines de micromètres d'épaisseur, réalisées dans un matériau appelé matrice formable et de faible poids, par exemple un matériau polymère. Ces ellipsoïdes sont remplis d'un matériau électrooptique dont l'indice de réfraction peut changer sous l'effet de l'application d'un champ électrique. Selon l'invention, on choisit ce matériau électrooptique et la matrice elle même de telle sorte que, dans un état de la commande électrique, les indices de réfraction optique soient égaux et que dans l'autre, ils soient différents, l'indice de réfraction du matériau électrooptique, pour les ondes lumineuses arrivant en incidence normale ou faiblement oblique, étant alors supérieur à celui de la matrice. De la sorte, dans le premier état de commande électrique, la matrice et les microlentilles sont indiscernables pour l'oeil, et on a une vision normale à travers la lunette transparente. Dans le second cas de commande électrique, les indices de réfraction sont différents et les ellipsoïdes constituent des microlentilles qui compensent l'accommodation à l'infini de l'oeil et lui permettent, sans changement des conditions d'observation du reste du champ de vision, le discernement du point de l'écran de visualisation associé.

Pour obtenir un effet optique suffisant, il faut que le déphasage des ondes optiques entre le centre d'une microlentille et sa périphérie soit suffisamment grand pour que la courbure de ces ondes par rapport aux ondes planes d'accommodation à l'infini corresponde à une distance focale très faible, puisqu'elle doit être de l'ordre de l'épaisseur acceptable pour l'ensemble de la lunette, c'est à dire de l'ordre d'un millimètre ou tout au plus de quelques millimètres. Dans un système optique, ce déphasage D est de la forme :

$$D = R^2/(2f)$$

où R est le rayon de la lentille et f la distance focale recherchée .

A titre d'exemple numérique on prendra $R = 50 \ \mu m$ et $f = 500 \ \mu m$, ce qui donne $D = 2,5$ rad. Pour obtenir un tel déphasage dans le visible (longueurs d'onde de l'ordre de 0,5 $\mu m$) avec des épaisseurs de lentilles de l'ordre de 10 $\mu m$, il faut une variation de l'indice de réfraction, entre les deux états commandés électriquement, qui soit de l'ordre de 0,02 à 0,1. Ceci n'est pas accessible avec la plupart des matériaux utilisés en optique classique, par contre on peut atteindre couramment de telles valeurs avec des molécules de cristaux liquides.

Pour assurer une compensation convenable de l'accommodation à l'infini de l'oeil sur son champ de vision, il faut que les microlentilles soient situées sur une surface convexe par rapport à la rétine de l'oeil de l'utilisateur, typiquement sur une surface quasi-sphérique, de sorte que les rayons provenant de diverses directions d'observation puissent être vus par des zones différentes de la rétine.

Dans le mode préféré de réalisation de l'invention, les microlentilles sont constituées par divers procédés de formage dans l'épaisseur de la matrice de polymère et sont associées à des électrodes transparentes qui permettent leur commande électrique. Un procédé de formage consiste à mouler des demi-cavités à la surface de deux feuilles de polymère complémentaires l'une de l'autre, qui sont ensuite assemblées face à face après enduction de cristal liquide qui remplit les cavités lors de cet assemblage. Un autre procédé consiste à fabriquer une dispersion du cristal liquide dans le polymère de façon à avoir ségrégation de phases pour former des "globules" dont la taille dépend en particulier de la concentration relative des composants selon un "diagramme de phases" dont la nature est comprise de l'homme de l'art. On obtient ainsi des globules généralement quasi-sphériques dans lesquels les molécules de cristal liquide sont orientées parallèlement à l'interface de confinement entre le cristal liquide et le polymère de la matrice. Par une opération de laminage on écrase alors la matrice de polymère et les globules qu'elle contient pour donner à ceux-ci des formes d'ellipsoïdes aplatis qui constituent les microlentilles.

Les électrodes de commande des microlentilles sont formées par dépôt de couches minces transparentes (par exemple oxyde mixte d'indium et d'étain) selon des techniques adaptées de celles déjà connues de l'homme de l'art. Pour commander électriquement ces microlentilles, on utilise avantageusement une configuration matricielle multiplexée des électrodes.

Enfin en ce qui concerne la deuxième couche, elle n'a pas nécessairement d'existence physique autonome. Cette couche est une couche dont l'épaisseur doit être égale à la distance focale des microlentilles. Cette troisième couche doit de préférence, de façon à éviter les réflexions, être du même matériau que le matériau constituant l'une des première ou troisième couche.

Le matériau qui vient d'être décrit est dans le système selon l'invention utilisé pour en faire un verre de lunette, la lunette étant utilisée dans le système de visée selon l'invention.

Afin de permettre le calcul de la position du réticule sur le verre de lunette, la lunette est munie de moyens de mesure de la direction angulaire de l'axe de vision de la lunette. L'arme est également munie de moyens de mesure de sa direction de pointage.

Ces moyens de mesure peuvent être des magnétomètres, permettant de se repérer par rapport à la direction du champ magnétique terrestre du lieu géographique d'emploi. Ce peut aussi être un magnétomètre et un inclinomètre permettant de se repérer par rapport à la composante dur champ magnétique se situant dans un plan vertical.

Les inclinomètres sont connus dans l'art. Ils sont constitués par des capacités déformables, et donc variables, en fonction de leur inclinaison par rapport à la verticale.

Les moyens de mesure peuvent aussi être constitués de trois accéléromètres donnant au repos une indication de direction par rapport au vecteur accélération de la pesanteur. Les indications des appareils de mesure de la direction sont transmissibles par liaison à un calculateur. Ce dernier calcule la position sur chaque verre de lunette de l'affichage du réticule, le calcul est fait en supposant que l'arme est tenue à la hanche et que l'objectif visé est à une distance de 15 mètres.

Dans un mode plus sophistiqué de réalisation l'arme comporte en outre un télémètre laser dont la valeur de sortie est transmissible à un calculateur.

Le calculateur calcule alors d'une part le point d'affichage du réticule comme précédemment en supposant l'arme tenue à la hanche mais aussi l'angle de hausse à donner à l'arme en fonction de la distance et de la munition tirée. Cet angle de hausse se traduit par l'affichage d'un symbole sur la lunette.

L'arme est munie d'un bouton de désignation qui lorsqu'il est enfoncé indique au calculateur que l'objectif sur lequel est fixé le réticule est l'objectif visé. La direction de pointage du symbole est alors conservée et la visée se fait par mise en coïncidence du réticule et du symbole.

Un exemple particulier de réalisation sera maintenant décrit en référence aux dessins annexés dans lesquels :

- la figure 1, est une vue en coupe transversale d'un matériau permettant de réaliser la lunette selon l'invention ;
- la figure 2 est une représentation destinée à expliquer le fonctionnement du réseau de microlentilles composant la troisième couche du matériau selon l'invention ;
- les figures 3 et 4, sont des représentations destinées à expliquer le fonctionnement d'un mode particulier de réalisation de l'écran composant la première couche du matériau selon l'invention ;
- la figure 5, est une coupe schématique transversale d'un verre de lunette utilisant le matériau selon l'invention ;
- la figure 6, illustre un mode d'obtension du matériau constituant la couche 30 ;
- la figure 7 est destinée à expliquer le fonctionnement de la lunette selon l'invention.
- la figure 8, est destinée à montrer le fonctionnement de la lunette selon l'invention pour le tir au jugé ;
- la figure 9, représente un combattant équipé du dispositif complet selon l'invention comportant une arme individuelle, un calculateur, et la lunette selon l'invention.

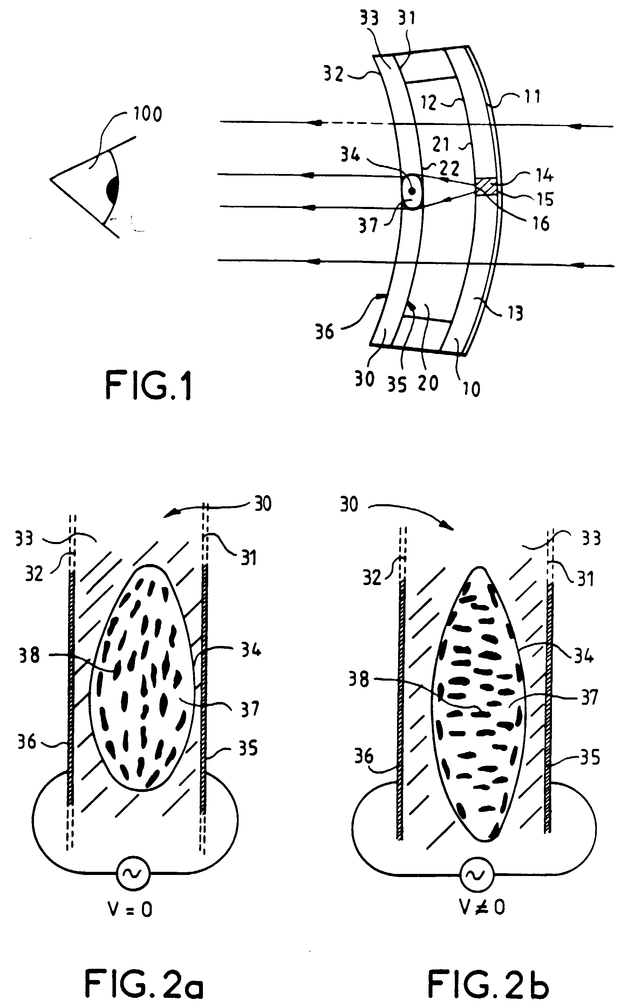

La figure 1 représente un matériau pour partie transparente de lunette selon l'invention. Ce matériau comporte trois couches référencées 10, 20, 30.

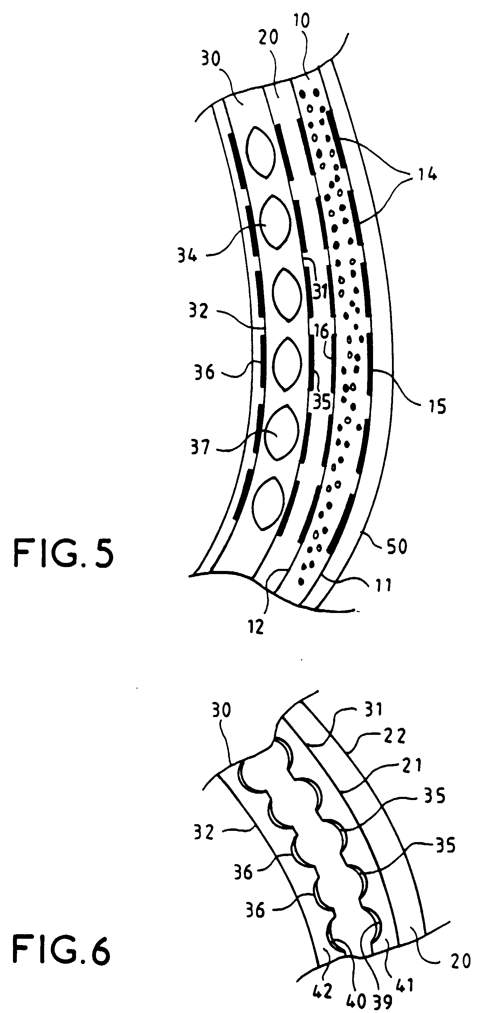

La première couche 10 est la couche dite écran. Elle comporte deux faces 11 et 12. Un matériau polymère transparent 13 compris entre ces deux faces à l'une de ses caractéristiques optiques qui est susceptible de variations en fonction du champ électrique auquel il est localement soumis. Pour faire varier ce champ électrique localement, sur des surfaces correspondant à la dimension d'un pixel image, représenté en 14 par une petite portion hachurée, les faces 11 et 12 de cette couche sont munies d'électrodes transparentes 15, 16, en oxyde mixte d'indium et d'étain. La disposition d'ensemble de ces électrodes sera expliquée plus loin en référence à la figure 5.

La deuxième couche 20 comporte deux faces 21, 22 et son épaisseur est égale à la distance focale de microlentilles incluses dans la couche 30, la couche 20 est composée d'un polymère de même nature ou tout au moins de même indice de réfraction que le polymère constituant les couches 10 et 30.

La troisième couche 30 comporte deux faces 31, 32 entre lesquelles est inséré un matériau polymère transparent 33 comportant des microcavités 34.

Les microcavités 34 sont en regard de chacun des pixels de la couche écran 10.

Ces microcavités sont remplies d'un liquide 37 dont l'indice de réfraction peut prendre deux valeurs en fonction du champ électrique auquel il est soumis. Dans la première valeur l'indice de réfraction du liquide 37 est égal à celui du matériau 34. Dans la seconde valeur il est différent en sorte que la cavité se comporte alors optiquement comme une lentille. Pour faire varier le champ électrique, des électrodes 35, 36 sont disposées en regard de chaque cavité. La disposition d'ensemble de ces électrodes sera explicitée plus loin en référence à la figure 5.

Les figures 2a et b représentent une microcavité 34 et le liquide 37 qu'elle contient. On a représenté également sous forme de petites taches noires allongées des molécules 38 du liquide composant le cristal. Sur la figure 2a, la tension entre les électrodes 35 et 36 situées de part et d'autre de la cavité sur les faces 31, 32 est nulle. Les molécules sont spontanément orientées parallèlement aux parois de la microcavité 34. Sur la figure 2b, en présence d'une tension non nulle les molécules centrales de la cavité s'orientent perpendiculairement aux parois de la microcavité, ce qui provoque un changement des qualités optiques du liquide 37. C'est cet effet qui est utilisé pour provoquer soit la transparence pure, soit l'effet lentille. Pour que la transparence soit bonne il convient que dans l'une des situations de tension, l'indice de réfration soit égal ou tout au moins très peu différent du matériau polymètre 33 composant la couche.

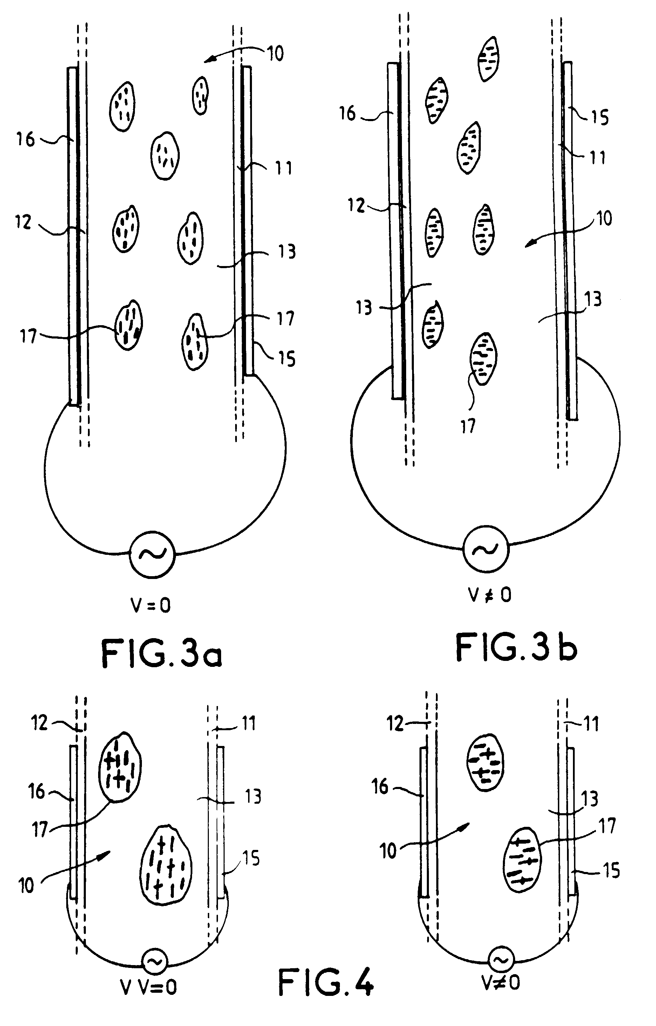

Les figures 3 et 4 illustrent pour un pixel, le fonctionnement de la couche 10 composant l'écran. Un cristal liquide 17 est disposé dans une matrice polymère 13 sous forme de gouttelettes dont la taille est de l'ordre du micromètre. En l'absence de tension figure 3a, les molécules de cristal liquide, représentées sous forme de taches allongées s'orientent spontanément parallèlement aux parois de la gouttelette, et dans ces conditions les gouttelettes sont diffusantes et apparaissent comme autant de points brillants. Par contre si une tension est appliquée par l'intermédiaire d'électrodes 15, 16, les molécules s'orientent perpendiculairement aux parois de la gouttelette (figure 3b), et si l'indice de réfraction des gouttelettes est le même que celui du polymère composant le matériau 13 de la couche écran, le matériau est transparent.

En l'absence de tension le pixel apparaît sous forme d'un point plus brillant.

Selon une variante de réalisation utilisée dans le mode particulier de réalisation, le cristal liquide comporte en solution des colorants absorbant pléochroïques, ce sont des colorants capables d'absorber des ondes lumineuses, ayant des longueurs d'onde différentes. Ces colorants absorbent fortement la lumière en l'absence de tension, par contre lorsqu'ils sont soumis à l'action d'un champ électrique et donc ordonnés ils sont transparents. Ces molécules de colorants pléochoïque sont représentées sous forme de petites croix sur la figure 4.

La figure 5 représente une coupe transversale d'un matériau réalisé conformément à l'invention.

Les trois couches 10 écran, 30 microlentilles et 20 sont représentées.

Dans la réalisation représentée figure 5 la couche écran 10 est constituée par un matériau polymère contenant en suspension des gouttelettes de cristaux liquide contenant un colorant pléochroïque comme représenté figure 4. Des électrodes 15, 16 placées en regard l'une de l'autre sur chacune des faces 11, 12 de la couche déterminent la dimension de chacun des pixels activables pour constituer une image. Dans le mode de réalisation selon l'invention où le matériau, est hémisphérique les électrodes sont disposées en réseau matriciel, selon des méridiens sur l'une des faces et selon des parallèles sur l'autre. Cette disposition est particulièrement bien adaptée à la présentation de réticule en forme de croix. L'image peut être permanente et sa cadence de renouvellement ne dépend que des mouvements à donner au réticule.

Pour des représentations d'images quelconques un balayage en ligne selon des procédés connus en euxmême peut être employé.

En regard de chacun des pixels de la couche 10, figure sur la couche 30 une microlentille commandable constituée par l'une des microcavités décrites figure 2. En regard de chaque cavité figure sur chacune des faces 31, 32 constituant la couche de lentilles des électrodes 35, 36. Ces électrodes sont constituées en réseau matriciel de la même façon que les électrodes de la couche écran, elles sont commandées en synchronisme de telle sorte que soient collimatés les pixels que l'on veut faire visualiser.

Dans le mode de réalisation représenté figure 5, les lentilles sont obtenues en dispersant dans le polymère le cristal liquide. Les globules obtenus ont une forme quasi sphérique et leur taille dépend des concentrations relatives de cristal et de polymère. le film polymère est alors laminé pour donné aux globules sphérique une forme d'élipsoïde de révolution d'axe perpendiculaire à la paroi. Les électrodes sont positionnées ensuite sur les faces extérieures 31, 32 de la couche.

Selon une réalisation actuellement préférée permettant une plus grande précision de positionnement des cavités et représentée figure 6 la couche 30 est constituée de deux demi couches 41, 42. Chacune des demi couches comporte deux faces 31, 39 pour l'une 32, 40 pour l'autre.

Des cavités sont équiréparties sur chacune des faces intérieures 39, 40. Ce mode permet de plus le positionnement des électrodes 35, 36 à l'intérieur des cavités ce qui réduit la tension à appliquer pour obtenir la même valeur de champ électrique dans le liquide électrooptique. Après enduction des faces intérieures 39, 40 des deux demi couches 41, 42 par un liquide électrooptique les deux demi couches sont assemblées par pression à chaud. La couche 30 ainsi formée peut avoir la configuration représentée figure 5 avec électrodes sur les faces externes 31, 32 ou la configuration représentée en éclaté des deux demi couches 41, 42 dans laquelle les électrodes sont situées sur les faces internes 39, 40 dans lesquelles sont moulées les microcavités.

Il convient de noter que dans ce mode de réalisation la couche intermédiaire 20 peut être constituée par une surépaisseur de la demi couche 41 dont la face 31 est située en regard de la couche écran. Dans ce cas les faces 21 et 31 en regard l'une de l'autre, des couches 20 et 30 n'ont plus d'existence physique.

Dans le mode de réalisation préféré le matériau destiné à constituer la surface transparente de la lunette comporte une quatrième couche 50 qui est un filtre destiné à protéger le combattant des attaques lasers. Ce filtre peut être commandable électriquement, comme la couche écran pour rendre opaque les points attaqués par un rayon laser.

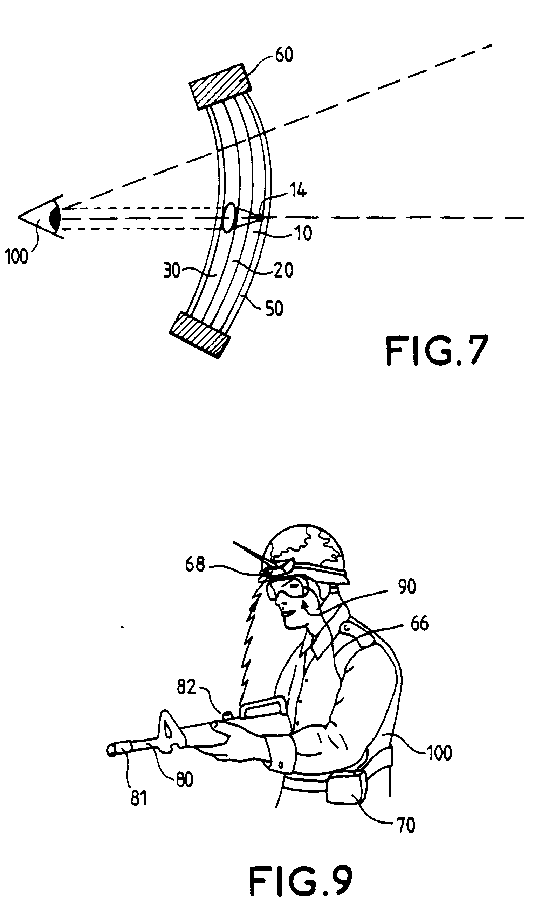

La figure 7 est un schéma destiné à expliquer le fonctionnement de la lunette. la surface transparente composée au minimum des trois couches 10, 20, 30 et éventuellement de la couche de protection 50 et entourée d'une monture 60 est placée dans le champ de vision d'un oeil 100. Lorsqu'un pixel 14 de la couche 10 est activé, la lentille 34 placée en regard est activée en synchronisme en sorte que l'oeil voit ce pixel sans avoir besoin d'accommodation.

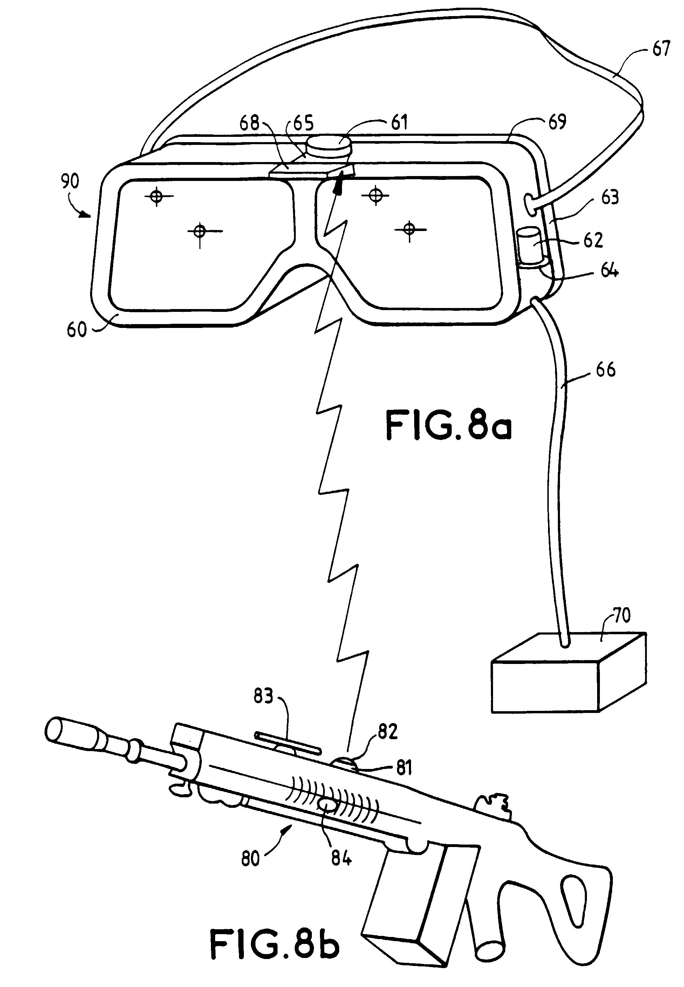

La figure 8, a et b, représente une lunette 90 équipée d'une surface transparente selon l'invention, d'une monture 60 sur laquelle sont fixés des capteurs de position 61, 62. La monture 60 de la lunette à l'allure générale d'une monture pour lunette de protection, intermédiaire entre une lunette de soudeur et des lunettes de plongée sous-marine ou de ski. L'extrémité 69 de la monture qui ne comporte pas de surface transparente et qui, lorsqu'elle est portée, est destinée à être appuyée contre le visage comporte sur tout son pourtour un boudin de gonflage 63. Ce boudin est gonflable par le souffle du porteur, au moyen d'un tuyau bouchable non représenté. Ce boudin est destiné d'une part à adapter le bord 69 de la monture à la forme du visage du porteur, et d'autre part à augmenter le volume entre la lunette et le visage sans augmentation corrélative de la quantité d'air comprise dans ce volume. De la sorte, la lunette est plaquée contre le visage. Le boudin est réalisé en matériau isolant anti-allergique.

Le capteur 61 est un magnétomètre donnant une direction d'azimut.

Le capteur 62 est un inclinomètre donnant une direction de site. Le magnétomètre 61 est placé sur un méplat 65 d'un bord supérieur de la monture. L'inclinomètre 62 est placé sur un méplat 64 d'un bord latéral de la monture. Les informations de site et d'azimut des moyens de mesure 61 et 62 sont transmissibles vers un calculateur 70 par une liaison 66.

La lunette est équipée d'une courroie réglable de maintien 67.

Elle est également équipée d'un récepteur infrarouge 68 dont la fonction sera explicitée plus loin.

L'arme 80 utilisée avec la lunette 90 est une arme ordinaire représentée figure 8b. Cette arme est modifiée pour comporter un capteur combiné de site et gisement 81, dont les données de sortie sont transmises à un émetteur infrarouge (IR)82 situé au-dessus du capteur 81. Le capteur et l'émetteur sont placés le plus près possible de la sortie du canon de l'arme, ceci pour augmenter la probabilité que l'émetteur IR82 et le récepteur IR68 de la lunette 90 soient en permanence en regard l'un de l'autre lorsque l'arme 80 est en position de tir.

Dans le cas de la réalisation selon l'invention, l'arme comporte en outre un télémètre laser 83 permettant la mesure de distance et le réglage de la hausse comme indiqué plus haut. Un bouton pressoir 84 permet, lorsqu'il est enclenché, l'émission d'un code particulier de l'émetteur 82 et le fonctionnement du télémètre laser 83.

Le fonctionnement est le suivant : les informations de direction de l'arme en provenance du groupe de capteurs 81 sont transmises par l'émetteur infrarouge 82 vers le récepteur 68 de la lunette 90. Ces informations, augmentées éventuellement du code de désignation émis par poussée du bouton 84, et de la distance de la cible, sont transmises par la liaison 66 mentionnée plus haut vers un calculateur 70. Ce calculateur reçoit également les informations de position en provenance des capteurs 61/62 de la lunette 90. Les informations de position sont transmises toute les 30 ms. Le calculateur calcule les directions relatives de l'arme et de l'axe de la lunette et affiche la position du réticule en conséquence.

Lorsque le bouton 84 est poussé, la réception du signal provoque une interruption qui modifie le calcul en cours, pour introduire la donnée de distance et des données pré-enregistrées relatives à la nature de la munition.

Le calculateur calcule alors l'angle de hausse et représente sur la lunette la direction de pointage utile par un symbole. Le tireur doit alors mettre le réticule qui apparaît sur sa lunette en coïncidence avec ce symbole.

Les domaines d'application de la lunette seule et d'un calculateur peuvent être :

La visualisation d'une réalité opérationnelle partiellement ou totalement cachée :

- situation de combat derrière une levée de terre ou une colline, reconstituée et présentée dans la bonne direction par le calculateur sur la base des données fournies par d'autres observateurs (guetteurs, hélicoptères, etc ...)
- configuration intérieure d'un bâtiment dont on ne voit que les façades extérieures mais dont l'intérieur est connu grâce aux bases de données en archives.

Représentation de "réalité virtuelle" pour des applications :

- en génie civil et en architecture (représentation en superposition sur site d'ouvrages d'art ou de bâtiments à construire)
- en archéologie (représentation de l'état initial de bâtiments en ruines) avec des appareils auxiliaires équipés de capteurs de direction.

Avec des appareils auxiliaires équipés de capteurs de direction les domaines d'application de l'invention peut être :

- dispositif de visée, pour tir en rafale avec une arme automatique, équipée de capteurs, tenue à la hanche pour fusil lance grenades ou pour mortier.
- prise de vue avec un dispositif comportant une caméra équipée de capteurs de direction.

Pour le cinéma, visualisation permanente du pointage et du champ de prise de vue de la caméra, présentation virtuelle de modifications de décors ou de figurants (emplacements, attitudes, etc ...)

Pour la vidéo, et notamment les camescopes, visualisation permanente du pointage et du cadrage, sans utilisation du viseur (ce qui pourrait permettre à certains touristes de ne pas voir tout leur voyage dans le viseur de leur camescope ...).

Avec les matériaux connus dans l'état de l'art, les temps de réponse du dispositif sont conditionnés par le temps de réponse de la couche 10 constituant l'écran. Celui-ci est variable de 40 ms lorsque sa température est de 25°C, à 200 ms lorsque sa température est de 0°C.

La figure 9 représente un combattant 100 équipé d'un fusil 80 de lunette et d'un calculateur 70 selon l'invention.

## Revendications

1. Matériau (33) utilisable pour le contrôle de la focalisation d'un rayon lumineux, constitué en couche mince comportant deux faces, une première (31) et une seconde (32), composé d'une matrice polymère transparente formable, ayant un indice de réfraction et comportant incluses entre ses deux faces (31,32) des parties (34), constituées d'une matière transparente (37) différente de celle de la matrice, dont l'indice de réfraction est susceptible de varier sous l'action d'un champ électrique produit par des électrodes (35,36) situées en regard de ces parties, matériau caractérisé en ce que la matière (37) incluse dans la matrice a pour une première valeur de champ électrique un indice de réfraction égal à celui de la matrice et pour une seconde valeur de champs un indice supérieur et en ce que les parties (34) contenant la matière incluse sont des microcavités ayant la forme de microlentilles dont l'axe optique est perpendiculaire aux deux faces (31,32) du matériau.

2. Matériau selon la revendication 1 caractérisé en ce que les microcavités (34) ont des formes d'ellipsoïde de révolution, l'axe de révolution étant perpendiculaire aux faces (31, 32) du matériau (33).

3. Matériau (33) selon la revendication 1 caractérisé en ce qu'il est constitué de deux demi-couches (41, 42) de polymère transparent accolées l'une à l'autre, chacune des demi-couches ayant deux faces (31, 39 ; 32, 40), une première face (31, 32) étant lisse et une seconde (39, 40) étant creusée de demi-microcavités, les faces creusées (39, 40) de chacune des demi-couches étant en regard l'une de l'autre et les demi-microcavités de chaque face étant en regard l'une de l'autre, les microcavités (34) ainsi formées étant d'une part, remplies de ladite matière qui est un liquide électro-optique (37) susceptible de deux valeurs en fonction du champ électrique et d'autre part, pourvues d'électrodes transparentes (35, 36).

4. Matériau selon la revendication 3, caractérisé en ce que les demi-microcavités ont des formes hémisphériques.

5. Matériau selon la revendication 4, caractérisé en ce que l'une des demi-couches (41) est plus épaisse que l'autre, l'épaisseur supplémentaire constituant une surépaisseur.

6. Matériau composite destiné à former une surface transparente pour une lunette, comportant au moins trois couches minces successives, une seconde couche (20) étant entre une première (10) et une troisième couche (30), la première couche (10) étant constituée d'un premier matériau transparent (13) comportant deux faces (11, 12), l'une des caractéristiques optiques dudit premier matériau transparent (13) étant susceptible de varier localement sous l'action d'un champ électrique, chacune des faces de cette première couche étant pourvue d'un réseau d'électrodes (15, 16), la troisième couche étant constituée d'un second matériau transparent (33) selon l'une des revendications 1 à 4 et la seconde couche étant constitué d'un polymère transparent.

7. Matériau composite selon la revendication 6, la troisième couche (30) étant constituée dudit second matériau transparent (33) conforme à la revendication 6 et en ce que la seconde couche (20) est constituée par la surépaisseur de la deuxième demi-couche (41) de la troisième couche (30).

8. Lunette (90) du type comportant une monture (60) et au moins une surface transparente, les surfaces transparentes étant constituées par l'un des matériaux composites selon les revendications 6 ou 7, les électrodes (15, 16) (35, 36) des première et troisième couches (10, 30) de ce matériau composite étant reliables à une source extérieure par une liaison (66).

9. Lunette (90) selon la revendication 8, la monture (60) étant équipée de moyens (61, 62) permettant de définir une direction de référence pour les faces (11, 32) des surfaces transparentes de la lunette.

10. Lunette (90) selon la revendication 9, les moyens de définition de la direction de référence étant constitués par un magnétomètre (61) et un inclinomètre (62).

11. Lunette (90) selon la revendication 9, équipée en outre d'un récepteur infrarouge (68).

12. Lunette selon l'une des revendications 8 à 11 dans laquelle la monture (60) comporte deux contours d'extrémités l'un en contact avec le matériau composite constituant la surface transparente et l'autre (69) destinée à être en contact avec le visage d'un porteur, l'extrémité (69) étant constitué par un boudin gonflable (63).

13. Dispositif de visée pour arme du type destinée à tirer une munition au moyen d'un tube canon comportant un axe longitudinal, le dispositif comportant une lunette (90) selon l'une des revendications 8 à 12, une arme (80) comportant des moyens (81) de mesure de la direction de pointage de l'axe du canon et des moyens (82) de transmission vers un récepteur extérieur des données des moyens de mesure (81), un calculateur (70) relié par une liaison (66) à la lunette selon l'une des revendications 8 à 12 et recevant les valeurs mesurées par les moyens de mesure de l'arme.

14. Dispositif selon la revendication 13, le récepteur extérieur étant constitué par un récepteur (68) disposé sur la lunette, le calculateur (70) recevant les valeurs mesurées par les moyens (81) de mesure de la direction de pointage de l'arme par l'intermédiaire du récepteur (68) et de la liaison (66).

15. Arme (80), comportant le dispositif selon l'une des revendications 13 ou 14, des moyens (81) de mesure de la direction de pointage de l'axe du canon et des moyens (82) de transmission vers un récepteur extérieur des données des moyens de mesure 81.

16. Arme (80) selon la revendication 15, les moyens de transmission (82) étant constitués par un émetteur infrarouge.

17. Arme selon l'une des revendications 15 ou 16, comportant un télémètre laser (83) et un bouton (84), la poussée du bouton provoquant une mesure par le télémètre et l'émission d'un code par les moyens de transmission (82).

**Patentansprüche**

1. Material (33), das für die Kontrolle der Fokussierung eines Lichtstrahls verwendbar ist und aus einer dünnen Schicht mit zwei Hauptflächen besteht, einer ersten (31) und einer zweiten Hauptfläche (32), wobei die Schicht aus einer formbaren transparenten Polymermatrix mit einem Brechungsindex besteht und Einschlüsse (34) zwischen den beiden Hauptflächen (31, 32) aus einem transparenten Material (37) enthält, das sich von dem der Matrix unterscheidet und dessen Brechungsindex unter der Wirkung eines über Elektroden (35 und 36), die gegenüber diesen Einschlüssen liegen, erzeugten Magnetfelds verändert werden kann, dadurch gekennzeichnet, daß das Material (37), das in die Matrix eingeschlossen ist, für einen ersten Wert des elektrischen Felds einen Brechungsindex gleich dem der Matrix und für einen zweiten Wert des elektrischen Felds einen höheren Brechungsindex besitzt, und daß die Einschlüsse (34) Mikrokavitäten in Form von Mikrolinsen bilden, deren optische Achse senkrecht zu den beiden Hauptflächen (31, 32) des Materials verläuft.

2. Material nach Anspruch 1, dadurch gekennzeichnet, daß die Mikrokavitäten (34) die Form von drehsymmetrischen Ellipsoiden besitzen, wobei die Symmetrieachse senkrecht zu den beiden Hauptflächen (31, 32) des Materials (33) verläuft.

3. Material (33) nach Anspruch 1, dadurch gekennzeichnet, daß es aus zwei Teilschichten (41, 42) eines transparenten Polymermaterials besteht, die aufeinandergeklebt sind, wobei jede Teilschicht eine erste glatte Hauptfläche (31 bzw. 32) und eine zweite Hauptfläche (39 bzw. 40) besitzt, die halbe Mikrokavitäten aufweist, daß die Seiten mit Mikrokavitäten (39, 40) jeder Teilschicht einander gegenüberliegen und die Halbmikrokavitäten der beiden Seiten einander ergänzen und daß die so gebildeten Mikrokavitäten (34) einerseits mit einem Material gefüllt sind, das von einer elektro-optischen Flüssigkeit (37) gebildet wird und unter dem Einfluß eines elektrischen Felds zwei Werte annehmen kann, und andererseits transparente Elektroden (35, 36) besitzen.

4. Material nach Anspruch 3, dadurch gekennzeichnet, daß die halben Mikrokavitäten Halbkugelform besitzen.

5. Material nach Anspruch 4, dadurch gekennzeichnet, daß eine der Teilschichten (41) dicker als die andere ist, wobei die zusätzliche Dicke eine Überdicke bildet.

6. Zusammengesetztes Material, das eine transparente Scheibe für eine Brille bilden soll, mit mindestens drei aufeinanderfolgenden Schichten, wobei eine zweite Schicht (20) zwischen einer ersten Schicht (10) und einer dritten Schicht (30) liegt und die erste Schicht (10) von einem ersten transparenten Material (13) mit zwei Hauptflächen (11, 12) gebildet wird, wobei eines der optischen Merkmale des ersten transparenten Materials (13) örtlich unter dem Einfluß eines elektrischen Felds verändert werden kann, wobei jede der Hauptflächen der ersten Schicht ein Netz von Elektroden (15, 16) trägt und die dritte Schicht aus einem zweiten transparenten Material (33) gemäß einem der Ansprüche 1 bis 4 besteht, während die zweite Schicht aus einem transparenten Polymermaterial besteht.

7. Zusammengesetztes Material nach Anspruch 6, bei dem die dritte Schicht (30) aus dem zweiten transparenten Material (33) gemäß Anspruch 6 und die zweite Schicht (20) aus der Überdicke der zweiten Teilschicht (41) der dritten Schicht (30) besteht.

8. Brille (90), die eine Fassung (60) und mindestens eine transparente Scheibe besitzt, wobei die transparenten Scheiben aus einem der zusammengesetzten Materialien nach den Ansprüchen 6 oder 7 bestehen, und die Elektroden (15, 16; 35, 36) der ersten bzw. dritten Schicht (10, 30) aus diesem zusammengesetzten Material an eine äußere Quelle über eine Verbindung (66) angeschlossen werden können.

9. Brille (90) nach Anspruch 8, bei der die Fassung (60) Mittel (61, 62) aufweist, um eine Bezugsrichtung für die Hauptflächen (11, 32) der transparenten Scheiben der Brille definieren zu können.

10. Brille (90) nach Anspruch 9, bei der die Mittel zur Definition der Bezugsrichtung von einem Magnetometer (61) und einem Neigungsmesser (62) gebildet werden.

11. Brille (90) nach Anspruch 9, die außerdem einen Infrarotempfänger (68) enthält.

12. Brille nach einem der Ansprüche 8 bis 11, in der die Fassung (60) zwei Konturen am Ende besitzt, von denen eine in Kontakt mit dem die transparente Scheibe bildenden zusammengesetzten Material und die andere (69) in Kontakt mit dem Gesicht des Trägers kommen soll, wobei dieses Ende von einem aufblasbaren Wulst (63) gebildet wird.

13. Visiervorrichtung für eine Waffe, mit der eine Munition mit Hilfe eines rohrförmigen Laufs mit einer Längsachse abgefeuert werden soll, wobei die Vorrichtung eine Brille (90) nach einem der Ansprüche 8 bis 12, eine Waffe (80), die Mittel (81) zur Messung der Zielrichtung der Achse der Waffe und Mittel (82) zur Übertragung der Meßdaten der Meßmittel (81) an einen äußeren Empfänger aufweist, und einen Rechner (70) besitzt, der über eine Verbindung (66) mit der Brille nach einem der Ansprüche 8 bis 12 verbunden ist und die von den Meßmitteln der Waffe gemessenen Werte empfängt.

14. Vorrichtung nach Anspruch 13, bei der der äußere Empfänger von einem Empfänger (68) gebildet wird, der auf der Brille angeordnet ist, wobei der Rechner (70) die Meßwerte von den Meßmitteln (81) für die Zielrichtung der Waffe über den Empfänger (68) und die Verbindung (66) empfängt.

15. Waffe (80) mit einer Vorrichtung nach einem der Ansprüche 13 oder 14, mit Mitteln (81) zur Messung der Zielrichtung der Achse der Waffe und mit Mitteln (82) zur Übertragung der Daten der Meßmittel (81) zu einem äußeren Empfänger.

16. Waffe (80) nach Anspruch 15, bei der die Übertragungsmittel (82) von einem Infrarotsender gebildet werden.

17. Waffe nach einem der Ansprüche 15 oder 16, bei der ein Laserentfernungsmesser (83) und eine Taste (84) vorgesehen sind, wobei durch Druck auf die Taste eine Entfernungsmessung und die Aussendung eines Kodes über die Übertragungsmittel (82) ausgelöst werden.

## Claims

1. Material (33) which can be used for control of the focusing of a light ray, consisting of a thin layer comprising two faces, a first one (31) and a second one (32), composed of a shapeable transparent polymer matrix, having a refractive index and comprising, included between its two faces (31, 32), parts (34) consisting of a transparent substance (37) different from that of the matrix, the refractive index of which is capable of varying under the action of an electric field produced by electrodes (35, 36) situated facing these parts, material characterized in that the substance (37) included in the matrix has, for a first value of electric field, a refractive index equal to that of the matrix, and a higher index for a second field value, and in that the parts (34) containing the included substance are microcavities having the shape of microlenses the optical axis of which is perpendicular to the two faces (31, 32) of the material.

2. Material according to Claim 1, characterized in that the microcavities (34) have rotationally symmetric ellipsoid shapes, the axis of rotation being perpendicular to the faces (31, 32) of the material (33).

3. Material (33) according to Claim 1, characterized in that it consists of two half-layers (41, 42) of transparent polymer placed next to each other, each of the half-layers having two faces (31, 39; 32, 40), a first face (31, 32) being smooth and a second (39, 40) being indented with semi-microcavities, the indented faces (39, 40) of each of the half-layers being face to face with one another and the semi-microcavities of each face being face to face with one another, the microcavities (34) thus formed being, on the one hand, filled with the said substance which is an electrooptical liquid (37) capable of two values depending on the electric field and, on the other hand, being provided with transparent electrodes (35, 36).

4. Material according to Claim 3, characterized in that the semi-microcavities have hemispherical shapes.

5. Material according to Claim 4, characterized in that one of the half-layers (41) is thicker than the other, the additional thickness constituting an overthickness.

6. Composite material intended to form a transparent surface for goggles, comprising at least three successive thin layers, a second layer (20) being between a first (10) and a third (30) layer, the first layer (10) being made of a first transparent material (13) comprising two faces (11, 12), one of the optical characteristics of the said first transparent material (13) being capable of varying locally under the action of an electric field, each of the faces of this first layer being provided with an array of electrodes (15, 16), the third layer consisting of a second transparent material (33) according to one of Claims 1 to 4 and the second layer consisting of a transparent polymer.

7. Composite material according to Claim 6, the third layer (30) consisting of the said second transparent material (33) in accordance with Claim 6 and the second layer (20) consisting of the overthickness of the second half-layer (41) of the third layer (30).

8. Goggles (90) of the type comprising a frame (60) and at least one transparent surface, the transparent surfaces consisting of one of the composite materials according to Claims 6 or 7, the electrodes (15, 16) (35, 36) of the first and third layers (10, 30) of this composite material being capable of being linked to an external source by a link (66).

9. Goggles (90) according to Claim 8, the frame (60) being equipped with means (61, 62) making it possible to define a reference direction for the faces (11, 32) of the transparent surfaces of the goggles.

10. Goggles (90) according to Claim 9, the means for defining the reference direction consisting of a magnetometer (61) and an inclinometer (62).

11. Goggles (90) according to Claim 9, additionally equipped with an infrared receiver (68).

12. Goggles according to one of Claims 8 to 11 in which the frame (60) comprises two end contours, one in contact with the composite material constituting the transparent surface and the other (69) intended to be in contact with the face of a wearer, the end (69) consisting of an inflatable roll (63).

13. Sighting device for a weapon of the type intended to fire a round by means of a gun barrel comprising a longitudinal axis, the device comprising goggles (90) according to one of Claims 8 to 12, a weapon (80) comprising means (81) for measuring the aiming direction of the axis of the gun and means (82) for transmitting data from the measurement means (81) to an external receiver, a computer (70) linked by a link (66) to the goggles according to one of Claims 8 to 12 and receiving the values measured by the measurement means of the weapon.

14. Device according to Claim 13, the external receiver consisting of a receiver (68) arranged on the goggles, the computer (70) receiving the values measured by the means (81) for measuring the aiming direction of the weapon via the receiver (68) and the link (66).

15. Weapon (80), comprising the device according to one of Claims 13 or 14, means (81) for measuring the aiming direction of the axis of the gun and means (82) for transmitting data from the measurement means 81 to an external receiver.

16. Weapon (80) according to Claim 15, the transmission means (82) consisting of an infrared transmitter.

17. Weapon according to one of Claims 15 or 16, comprising a laser range finder (83) and a knob (84), pushing the knob initiating a measurement by the range finder and the sending of a code by the transmission means (82).

FIG.1

FIG.2a

FIG.2b

FIG.3a

FIG.3b

FIG.4

FIG. 5

FIG.6

FIG.7

FIG.9

FIG.8a

FIG.8b